# EUROPÄISCHE PATENTSCHRIFT

(11) **EP 2 709 860 B1**
(45) Veröffentlichungstag und Bekanntmachung des Hinweises auf die Patenterteilung: **06.04.2016**
(21) Anmeldenummer: 12721175.3
(22) Anmeldetag: 10.05.2012
(51) Int. Cl.: F16F 13/06, F16F 15/03, F16F 15/14, F16F 9/12, B60G 13/16, B60G 13/18, F16F 9/14

(54) **ROTATIONSDÄMPFER**
ROTARY SHOCK ABSORBER
AMORTISSEUR ROTATIF

(30) Priorität: 17.05.2011 DE 102011101701
(43) Veröffentlichungstag der Anmeldung: 26.03.2014
(73) Patentinhaber: Audi AG, 85045 Ingolstadt (DE)
(72) Erfinder: WILLEMS, Marco, 85053 Ingolstadt (DE)
(86) Internationale Anmeldenummer: PCT/EP2012/002007
(87) Internationale Veröffentlichungsnummer: WO 2012/156047

(56) Entgegenhaltungen:
- EP-A1- 0 628 746
- EP-A1- 1 935 679
- DE-A1- 4 111 233
- DE-A1- 10 218 320
- DE-A1- 19 647 300
- DE-A1-102005 013 379
- DE-A1-102007 003 950
- DE-T2- 60 226 122
- DE-T2- 60 312 666
- DE-T2- 69 405 367
- JP-A- 3 239 619
- JP-A- 2001 055 033
- JP-A- 2002 316 524
- US-A1- 2004 222 755

## Beschreibung

Die Erfindung betrifft einen Rotationsdämpfer für ein Kraftfahrzeug, umfassend wenigstens ein Dämpferelement zum Dämpfen der Relativbewegung zwischen einer radaufhängungsseitig angeordneten ersten Masse und einer fahrzeugkarosserieseitig angeordneten zweiten Masse.

Es ist in vielen Bereichen der Technik erforderlich, Relativbewegungen zwischen zwei Bauteilen eines schwingungsfähigen mechanischen Systems zu dämpfen. Ein Beispiel ist die Schwingungsdämpfung an einer Kraftfahrzeugkarosserie im Bereich der Aufhängung der Karosserie am Fahrwerk. Hierzu werden beispielsweise hydraulische Dämpfer etwa in Form von linear wirkenden Teleskopdämpfern eingesetzt.

Rotationsdämpfer stellen eine Alternative zu den vorgenannten Teleskopdämpfern dar und sind an und für sich bekannt. Die Wirkungsweise eines Rotationsdämpfers beruht prinzipiell auf einem radaufhängungsseitig angeordneten, bei einer relativen Massenbewegung bewegbaren Hebelelement, welches direkt oder indirekt mit einem drehbar gelagerten Dämpferteil des dem Rotationsdämpfer zugehörigen Dämpferelements bewegungsgekoppelt ist, wodurch das entsprechende Dämpferteil in eine Drehbewegung versetzbar ist.

Durch die stetig steigenden Anforderungen an Komfort und Akustik moderner Kraftfahrzeuge, steigen auch die Anforderungen an die Absorptionsfähigkeit des Dämpfersystems gegenüber von beim Betrieb des Kraftfahrzeugs entstehenden Schwingungen.

Bekannte Ansätze zur Erhöhung der Absorptionsfähigkeit des Dämpfersystems umfassen insbesondere die Verwendung so genannter Elastomerlager, das heißt aus einem elastomeren Werkstoff gebildeter Lager. Weitergehende Maßnahmen sind regelmäßig durch das bekanntermaßen eingeschränkte Bauraumangebot innerhalb eines einen entsprechenden Rotationsdämpfer aufnehmenden Radkasten begrenzt.

Ein solcher Ansatz ist aus der DE 10218320 bekannt.

Der Erfindung liegt das Problem zugrunde, einen, insbesondere bezüglich der Absorptionsfähigkeit von beim Betrieb des Kraftfahrzeugs entstehenden Schwingungen, verbesserten Rotationsdämpfer anzugeben.

Zur Lösung dieses Problems ist ein Rotationsdämpfer der eingangs genannten Art vorgesehen, der sich dadurch auszeichnet, dass an dem Rotationsdämpfer wenigstens ein Schwingungstilger angeordnet ist.

Die vorliegende Erfindung beruht auf der Idee, einen oder mehrere Schwingungstilger direkt an dem Rotationsdämpfer anzubringen, um derart im Betrieb des Kraftfahrzeugs und/oder des Rotationsdämpfers entstehende Schwingungen zu bedämpfen. Der wenigstens eine Schwinungstilger ist somit direkter Bestandteil des Rotationsdämpfers, was insbesondere eine Bedämpfung entsprechender Schwingungen noch vor Ausbreitung dieser in die Fahrgastzelle, in welcher diese regelmäßig als störend wahrgenommen werden, ermöglicht.

Die erfindungsgemäße Lösung trägt zudem der begrenzten Bauraumsituation innerhalb des Radkastens eines Kraftfahrzeugs Rechnung, da der Schwingungstilger durch seine direkte Anordnung an dem Rotationsdämpfer wenig Bauraum beansprucht.

Der erfindungsgemäß eingesetzte Schwingungstilger kann in im Weiteren noch beschriebenen Ausführungsformen vorliegen und individuell sowie bedarfsgerecht auf ein entsprechendes Frequenzspektrum an Schwingungen eingestellt sein, sodass beispielsweise hochfrequente oder tieffrequente Schwingungen gezielt bedämpft werden können. Insbesondere können akustisch wahrnehmbare Frequenzen bedämpft werden. Lediglich beispielhaft können mit entsprechend ausgeführten Schwingungstitgern Schwingungen im Bereich von 1 kHz bis 30 kHz bedämpft werden.

Das erfindungsgemäß vorgesehene Dämpferelement weist in der Regel ein feststehendes erstes Dämpferteil und ein unter Ausbildung einer Dämpfkraft relativ dazu drehbar gelagertes, mit einem durch die Massenbewegung bewegbaren, mit der ersten Masse verbundenen Hebelelement verbundenes zweites Dämpferteil auf, wobei das Hebelelement bei einer Massenbewegung eine Drehbewegung auf das zweite Dämpferteil überträgt, wobei der wenigstens eine Schwingungstilger an dem zweiten Dämpferteil und/oder dem Hebelelement angeordnet ist. Mithin ist der Schwingungstilger an den bewegbaren bzw. rotierenden Komponenten des Rotationsdämpfers, wie insbesondere dem zweiten Dämpferteil und/oder dem Hebelelement angeordnet, da hier naturgemäß eine Schwingungserzeugung bzw. Schwingungsverstärkung stattfindet.

Der Schwingungstilger kann wenigstens ein elastisch federndes Tilgerfederelement und wenigstens eine mit diesem verbundene Tilgermasse umfassen. Tilgerfederelement und Tilgermasse bilden dabei ein selbstständiges Schwingungssystem, welches dem Schwingungssystem des Rotationsdämpfers entgegenwirkt, das heißt dieses abschwächt und somit bedämpft. Entsprechend sind in Abhängigkeit der konkreten insbesondere werkstofflichen sowie konstruktiven Ausgestaltung des Tilgerfederelements und der Tilgermasse unterschiedlich frequente Schwingungen bedämpfbar.

Die Verbindung des Tilgerfederelements und der Tilgermasse kann insbesondere über eine schwingungsübertragende Verbindung, wie zum Beispiel Kleben, Schweißen, Nieten erfolgen. Grundsätzlich kann die Verbindung des Tilgerfederelements mit der Tilgermasse lösbar oder unlösbar ausgeführt sein.

Das Tilgerfederelement ist beispielsweise als mechanische Feder oder gummielastischer Elastomerkörper ausgebildet. Die Tilgermasse ist beispielsweise ein aus Elastomer und/oder Metall gebildeter Massekörper. Entsprechend kann die Tilgermasse beispielsweise als ein mit einem Elastomer wenigstens teilweise umspritzter Stahlring oder ein wenigstens teilweise mit einem Elastomer überzogener Metallkörper vorliegen.

Die konstruktive Auslegung des Dämpferelements betreffend kann das Dämpferelement ein hohlzylindrisches Gehäuse umfassen, in welchem das erste und das zweite Dämpferteil aufgenommen sind. Das Gehäuse ist insbesondere über wenigstens einen mit entsprechenden Befestigungsabschnitten versehenen Gehäuseabschnitt beispielsweise über Schraub- oder Nietverbindungen lösbar oder unlösbar mit der Fahrzeugkarosserie verbunden. Dabei ist es möglich, dass das erste und das zweite Dämpferteil je als hohlzylindrische Körper ausgebildet sind, wobei entweder das erste Dämpferteil innerhalb des zweiten Dämpferteils oder das zweite Dämpferteil innerhalb des ersten Dämpferteils aufgenommen ist. Die Anordnung ist jedenfalls derart, dass das zweite, mit dem Hebelelement bewegungsgekoppelte Dämpferteil relativ zu dem ersten lagefest angeordneten Dämpferteil drehbar ist. Das erste oder das zweite Dämpferteil kann entsprechend als Teil des oder integriert in das Gehäuse des Dämpferelements ausgebildet sein, sodass im Falle des einen Teil des Gehäuses des Dämpferelements bildenden zweiten Dämpferteils das Gehäuse entsprechend drehbar gelagert ist.

Es ist ferner denkbar, dass zwischen dem Hebelelement und dem Dämpferelement ein Getriebe angeordnet ist, wobei wenigstens ein erstes Getriebeelement mit dem Hebelelement bewegungsgekoppelt und über dieses in eine Drehbewegung versetzbar und wenigstens ein zweites, mit dem ersten Getriebeelement direkt oder indirekt übersetzt gekoppeltes Getriebeelement mit dem zweitem Dämpferteil bewegungsgekoppelt ist, derart, dass eine Drehbewegung des zweiten Dämpferteils erfolgt. Die Zwischenschaltung eines Getriebes erlaubt eine Übersetzung von Bewegungen des Hebelelements, sodass vergleichsweise geringfügige Bewegungen respektive Auslenkungen des Hebelelements vergleichsweise hohe Umdrehungen bzw. Drehgeschwindigkeiten des zweiten Dämpferteils des Dämpferelements bewirken. Entsprechend kann die Dämpfwirkung des Dämpferelements erhöht werden.

Das Getriebe kann beispielsweise in Form eines Planetengetriebes, Spannungswellengetriebes, Zykloidgetriebes oder Stirnradgetriebes ausgebildet sein. Andere Getriebebauformen sind selbstverständlich ebenso denkbar.

Der Rotationsdämpfer kann als hydraulischer Rotationsdämpfer mit wenigstens einem hydraulischen Dämpferelement oder als elektrischer Rotationsdämpfer mit wenigstens einem elektrischen Dämpferelement ausgebildet sein. In ersterem Fall beruht die Dämpfwirkung des Dämpferelements auf der Umwälzung eines in einem dem Dämpferelement zugehörigen Volumen aufgenommenen Fluids, wie zum Beispiel eines geeigneten Hydrauliköls oder dergleichen. In letzterem Fall kann durch das Dämpferelement eine Umwandlung von mechanischer Energie in elektrische Energie erfolgen. In dieser Ausgestaltung umfasst der Rotationsdämpfer einen durch die Massenbewegung angetriebenen Generator mit einem feststehenden Stator einem relativ dazu drehbaren Rotor sowie vorteilhaft ein mit dem Generator gekoppeltes Getriebe. Das Funktionsprinzip des elektrischen Dämpfers beruht auf der Kopplung des Generators mit dem Getriebe, wobei das Abtriebselement des Getriebes eine über das direkt mit einem Antriebselement des Getriebes gekoppelte Hebelelement eingebrachte Drehbewegung auf den Rotor überträgt. Die in den Rotor eingeleitete Rotationsbewegung bedingt die Dämpfung über den Generator sowie die Rückgewinnung bzw. Umwandlung der ursprünglich aus der Massenbewegung resultierenden mechanischen Dämpfungsenergie in den generatorseitig erzeugten Strom.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines Rotationsdämpfers gemäß einer ersten beispielhaften Ausführungsform;
- Fig. 2: eine Prinzipdarstellung eines Rotationsdämpfers gemäß einer zweiten beispielhaften Ausführungsform;
- Fig. 3: eine perspektivische Darstellung des in Fig. 2 gezeigten Rotationsdämpfers in einer Frontalansicht; und
- Fig. 4: eine Prinzipdarstellung einer möglichen Verbausituation eines Rotationsdämpfers im Bereich einer Kraftfahrzeugachse.

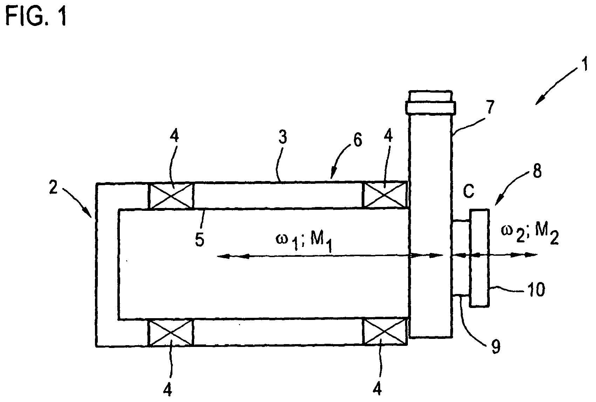

Fig. 1 zeigt eine Prinzipdarstellung eines Rotationsdämpfers 1 gemäß einer ersten beispielhaften Ausführungsform in einer geschnittenen Ansicht. Der Rotationsdämpfer 1 ist innerhalb eines Radkastens eines Kraftfahrzeugs (nicht gezeigt) angeordnet und umfasst ein Dämpferelement 2 zum Dämpfen der Relativbewegung zwischen einer radaufhängungsseitig angeordneten ersten Masse und einer fahrzeugkarosserieseitig angeordneten zweiten Masse. Das Dämpferelement 2 kann beispielsweise als elektrischer oder hydraulischer Dämpfer ausgebildet sein.

Das Dämpferelement 2 weist ein feststehendes erstes Dämpferteil 3 und ein unter Ausbildung einer Dämpfkraft relativ dazu über Lagerelemente 4 drehbar gelagertes Dämpferteil 5 auf. Das erste Dämpferteil 3 kann gleichermaßen als Gehäuse 6 des Dämpferelements 2 dienen. Das Gehäuse 6 sowie die Dämpferteile 3, 5 weisen jeweils eine hohlzylindrische Form auf. Das zweite Dämpferteil 5 ist mit einem durch die Massenbewegung bewegbaren bzw. verschwenkbaren, mit der ersten Masse verbundenen Hebelelement 7 (Anlenkhebel) verbunden. Das Hebelelement 7 überträgt bei einer Massenbewegung eine Drehbewegung ω1 respektive ein Drehmoment M1 auf das zweite Dämpferteil 5. Hierbei können akustisch wahrnehmbare Schwingungen entstehen, die bei Eintritt in die Fahrgastzelle für den Fahrgast regelmäßig als unangenehm empfunden werden.

Entsprechend ist an dem Hebelelement 7 ein Schwingungstilger 8 angeordnet. Der Schwingungstilger 8 umfasst ein insbesondere scheibenförmiges elastisch federndes Tilgerfederelement 9 und eine mit diesem verbundene, insbesondere scheibenförmige Tilgermasse 10. Das Tilgerfederelement 9 ist beispielsweise als mechanische Stahlfeder mit einer gegebenen Federkonstante c ausgebildet, die Tilgermasse 10 ist beispielsweise als Trägheitskörper aus einem Elastomermaterial ausgebildet.

Der Schwingungstilger 8 ist als eigenes mechanisches Schwingungssystem zu sehen, welches den beim Betrieb des Rotationsdämpfers 1 respektive des Kraftfahrzeugs beispielsweise durch Abrollen entstehenden Schwingungen, welche insbesondere auf die Drehbewegung ω1 bzw. das Drehmoment M1 zurückzuführen sind, eine diese durch das Trägheitsmoment der Tilgermasse 10 bedingte bedämpfende Drehbewegung ω2 respektive ein Drehmoment M2 entgegensetzt. Das Drehmoment M2 des Schwingungstilgers 8 ist phasenversetzt zu dem Drehmoment M1 und bewirkt derart eine Abschwächung des Drehmoments M1 und somit eine Bedämpfung der durch dieses erzeugten Schwingungen.

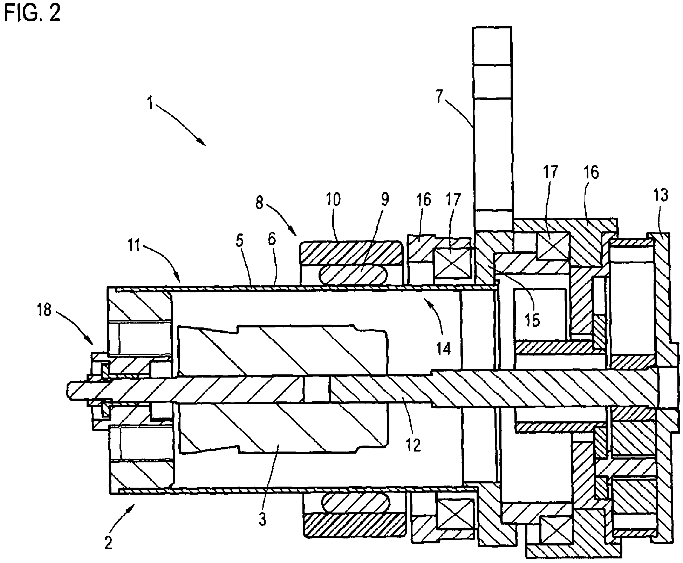

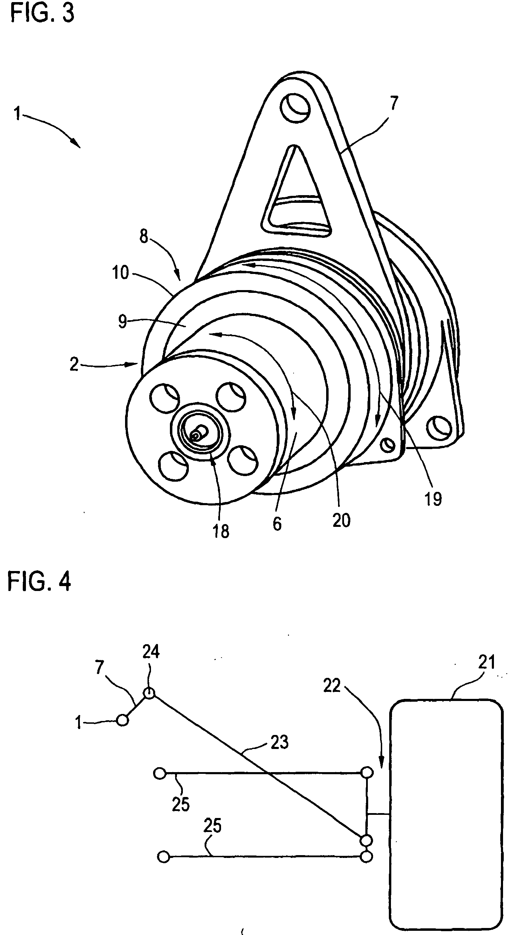

Fig. 2 zeigt eine Prinzipdarstellung eines Rotationsdämpfers 1 gemäß einer zweiten beispielhaften Ausführungsform, Fig. 3 zeigt eine zugehörige perspektivische Darstellung des Rotationsdämpfers 1 in einer Frontalansicht. Der Rotationsdämpfer 1 umfasst einen durch die Massenbewegung angetriebenen Generator mit einem in einem ersten Gehäuseabschnitt 11 eines hohlzylindrischen drehbaren Gehäuses 6 gehäuseinnenwandseitig integriert relativ zu einem innerhalb des Gehäuses 6 aufgenommenen feststehenden ersten zylindrischen Dämpferteil 3 in Form eines Stators drehbaren zweiten Dämpferteil 5 in Form eines Rotors. Das erste Dämpferteil 3 ist insbesondere über einen das Gehäuse 6 durchsetzenden Axialzapfen 12 in einer Endplatte 13 des Rotationsdämpfers 1 gehaltert.

Das Gehäuse 6 schließt über einen zweiten Gehäuseabschnitt 14 an einen ringförmigen Aufnahmebereich 15 des Anlenkhebels 7 an. Der ringförmige Aufnahmebereich 15 des Hebelelements 7 umgreift den zweiten Gehäuseabschnitt 14 unter Ausbildung einer drehfesten Verbindung. Dabei liegt der ringförmige Aufnahmebereich 15 an der Außenseite des zweiten Gehäuseabschnitts 14 des Gehäuses 6 respektive dessen Außenwandung an, sodass Schwenkbewegungen des Hebelelements 7 in Drehbewegungen des Gehäuses 6 übertragen werden können. Die Anbindung des Gehäuses 6 an die Fahrzeugkarosserie erfolgt über ringförmige aufbaufeste Lagerringe 16, welche über Lagerelemente in Form von Wälzlagern 17 an dem Rotationsdämpfer 1 angeordnet sind.

Bei einer Massenbewegung etwa bedingt durch Bewegungen eines Fahrzeugrads wird das direkt mit dem durch die Massenbewegung bewegbaren Hebelelement 7 verbundene Gehäuse 6, welches das zweite Dämpferteil 5 umfasst, in eine Drehbewegung versetzt. Vorliegend schwenkt das Hebelelement 7 lotrecht zur Bildebene ein und aus, wodurch aufgrund einer drehfesten Verbindung des Hebelelements 7 mit dem Gehäuse 6 das Gehäuse 6 und damit das zweite Dämpferteil 5 eine Drehbewegung erfährt.

Durch die Relativbewegung des gehäuseseitig integrierten zweiten Dämpferteils 5 in Form des Rotors relativ zu dem ersten feststehenden Dämpferelement 3 in Form des Stators kann die bei einem Einfedern etwa einer mit dem Rotationsdämpfer 1 ausgestatteten Fahrzeugkarosserie entstehende mechanische Energie rückgewonnen bzw. in elektrische Energie umgewandelt werden, welche elektrische Energie beispielsweise über geeignete statorseitige Anschlussmittel 18 in ein Bordnetz eines Kraftfahrzeugs eingespeist werden kann. Hierfür umfasst das erste Dämpferteil 3, das heißt der Stator, nicht gezeigte Wicklungen. Die Anschlussmittel 18 können in Form eines oder als Teil eines den Axialzapfen 12 gehäusestirnwandseitig lagernden Kommutatorgehäuses ausgebildet sein.

Die Rückgewinnung bzw. Umwandlung der mechanischen Energie beruht auf dem Prinzip der magnetischen Induktion, das heißt in Wechselwirkung mit einem Erregermagnetfeld wird durch magnetische Induktion ein Moment entgegengesetzt der Rotation des zweiten Dämpferteils 5 erzeugt, welches die Dämpfkraft des elektrischen Dämpferelements 2 darstellt. Gleichermaßen wäre auch eine Stromerzeugung seitens des zweiten Dämpferteils 5 in Form des Rotors denkbar, wenn dieses anstelle des ersten Dämpferteils 3 entsprechende Wicklungen aufweist. Über eine gezielte Bestromung des Generators lassen sich die Dämpfungseigenschaften des Dämpferelements 2 einstellen.

Zur Reduzierung respektive Bedämpfung von beim Betrieb des Rotationsdämpfers 1 respektive des Kraftfahrzeugs entstehenden Schwingungen ist ebenso ein Schwingungstilger 8 vorgesehen. Dieser ist im Gegensatz zu der in Fig. 1 gezeigten Ausführungsform jedoch nicht am Hebelelement 7, sondern außenwandseitig an dem drehbaren bzw. drehenden Gehäuse 6 angeordnet. Ersichtlich ist auf dem Gehäuse 6 etwa durch Aufschrumpfen, Kleben, Schweißen etc. eine Tilgerfeder 9 drehfest angebracht, welche wiederum drehfest mit einer als Elastomerkörper oder Elastomerspur ausgebildeten Titgermasse 10 verbunden ist.

Aus der in Fig. 3 gezeigten Darstellung ist die Anordnung des Schwinungstilgers 8 auf der Außenwand des Gehäuses 6 nochmals dargestellt. Wie durch die Pfeile 19, 20 angedeutet ist, ist der Schwinungstilger 8 drehfest auf der Außenwand des Gehäuses 6 angeordnet, sodass bei Drehungen des Gehäuses 6 auch Drehungen des Schwinungstilgers 8 erfolgen, welche jedoch aufgrund dessen Masseträgheit Schwingungen des Rotationsdämpfers 1 reduzieren bzw. bedämpfen.

Fig. 4 zeigt eine Prinzipdarstellung einer möglichen Verbausituation eines Rotationsdämpfers 1 im Bereich einer Kraftfahrzeugachse. Gezeigt ist als Teil eines Kraftfahrzeugs ein Fahrzeugrad 21 nebst Radträger 22, an dem eine Schiebstange 23 angeordnet ist, welche mit dem Hebelelement 7 verbunden ist. Das Hebelelement 7 ist um die Drehachse 24 schwenkgelagert, wobei sich in der Drehachse 24 der erfindungsgemäße Rotationsdämpfer 1 befindet. Es wäre auch denkbar, den Rotationsdämpfer 1 unmittelbar in die Drehaufhängungen wenigstens eines Querlenkers 25 zu integrieren. Federt das Fahrzeugrad 21 ein oder aus, wird das Hebelelement 7 über die Schiebestange 23 bewegt und um die Drehachse 24 verschwenkt, worüber der erfindungsgemäße Rotationsdämpfer 1 in der beschriebenen Weise betrieben wird.

In den Figuren nicht gezeigt, jedoch durchaus möglich ist die Anordnung eines Getriebes zwischen dem Hebelelement 7 und dem Dämpferelement 2.

Dabei ist wenigstens ein erstes Getriebeelement mit dem Hebelelement 7 bewegungsgekoppelt und über dieses in ein Drehbewegung versetzbar und wenigstens ein zweites, mit dem ersten Getriebeelement direkt oder indirekt übersetzt gekoppeltes Getriebeelement mit dem zweiten Dämpferteil 5 bewegungsgekoppelt, derart, dass eine Drehbewegung des zweiten Dämpferteils 5 erfolgt. Das Getriebe kann beispielsweise als Planetengetriebe, Spannungswellengetriebe, Zykloidgetriebe oder Stirnradgetriebe ausgebildet sein.

## Patentansprüche

1. Rotationsdämpfer (1) für ein Kraftfahrzeug, umfassend wenigstens ein Dämpferelement (2), der zum Dämpfen der Relativbewegung zwischen einer radaufhängungsseitig angeordneten ersten Masse und einer fahrzeugkarosserieseitig angeordneten zweiten Masse ausgebildet ist,
**dadurch gekennzeichnet,**
**dass** an dem Rotationsdämpfer (1) wenigstens ein Schwingungstilger (8) angeordnet ist, wobei der Schwingungstilger (8) wenigstens ein elastisch federndes Tilgerfederelement (9) und wenigstens eine mit diesem verbundene Tilgermasse (10) umfasst.

2. Rotationsdämpfer nach Anspruch 1,
**dadurch gekennzeichnet,**
**dass** das Dämpferelement (2) ein feststehendes erstes Dämpferteil (3) und ein unter Ausbildung einer Dämpfkraft relativ dazu drehbar gelagertes, mit einem durch die Massenbewegung bewegbaren, mit der ersten Masse verbundenen Hebelelement (7) gekoppeltes zweites Dämpferteil (5) umfasst, wobei das Hebelelement (7) bei einer Massenbewegung eine Drehbewegung auf das zweite Dämpferteil (5) überträgt, wobei der wenigstens eine Schwingungstilger (8) an dem zweiten Dämpferteil (5) und/oder dem Hebelelement (7) angeordnet ist.

3. Rotationsdämpfer nach Anspruch 1 oder 2,
**dadurch gekennzeichnet,**
**dass** das Tilgerfederelement (9) als mechanische Feder oder gummielastischer Elastomerkörper ausgebildet ist.

4. Rotationsdämpfer nach einem der vorangehenden Ansprüche,
**dadurch gekennzeichnet,**
**dass** die Tilgermasse (10) ein aus Elastomer und/oder Metall gebildeter Massekörper ist.

5. Rotationsdämpfer nach einem Ansprüche 2 bis 4,
**dadurch gekennzeichnet,**
**dass** das Dämpferelement (2) ein hohlzylindrisches Gehäuse (6) umfasst, in welchem das erste Dämpferteil (3) und das zweite Dämpferteil (5) aufgenommen oder integriert sind.

6. Rotationsdämpfer nach einem der Ansprüche 2 bis 5,
**dadurch gekennzeichnet,**
**dass** das erste Dämpferteil (3) und das zweite Dämpferteil (5) je als hohlzylindrische Körper ausgebildet sind, wobei entweder das erste Dämpferteil (3) innerhalb des zweiten Dämpferteils (5) oder das zweite Dämpferteil (5) innerhalb des ersten Dämpferteils (3) aufgenommen ist.

7. Rotationsdämpfer nach Anspruch 2, oder nach Anspruch 2 und einem der vorangehenden Ansprüche,
**dadurch gekennzeichnet,**
**dass** das Hebelelement (7) und das zweite Dämpferteil (5) durch ein Getriebe gekoppelt sind, wobei wenigstens ein erstes Getriebeelement mit dem Hebelelement (7) bewegungsgekoppelt und über dieses in eine Drehbewegung versetzbar und wenigstens ein zweites, mit dem ersten Getriebeelement direkt oder indirekt übersetzt gekoppeltes Getriebeelement mit dem zweiten Dämpferteil (5) bewegungsgekoppelt ist, derart dass eine Drehbewegung des zweiten Dämpferteils (5) erfolgt.

8. Rotationsdämpfer nach Anspruch 7,
**dadurch gekennzeichnet,**
**dass** das Getriebe als Planetengetriebe, Spannungswellengetriebe, Zykloidgtriebe oder Stirnradgetriebe ausgebildet ist.

9. Rotationsdämpfer nach einem der vorangehenden Ansprüche,
**dadurch gekennzeichnet,**
**dass** er als hydraulischer Rotationsdämpfer (1) mit wenigstens einem hydraulischen Dämpferelement (2) oder als elektrischer Rotationsdämpfer (1) mit wenigstens einem elektrischen Dämpferelement (2) ausgebildet ist.

## Claims

1. Rotary damper (1) for a motor vehicle comprising at least one damper element (2) which is designed for damping the relative movement between a first mass arranged on the wheel-suspension side, and a second mass arranged on the vehicle body side,
**characterised in that**
arranged on the rotary damper (1) is at least one vibration absorber (8), wherein the vibration absorber (8) comprises at least one elastically spring-loaded absorbing spring element (9) and at least one absorbing mass (10) connected therewith.

2. Rotary damper according to claim 1
**characterised in that**
the damper element (2) comprises a stationary first damper section (3) and, creating a damping force, a second damper section (5) arranged relative thereto in a rotational manner with a lifting element (7) that is connected with the first mass and can be moved through movement of the mass, wherein in the event of a movement of the mass the lifting element (7) transfers a rotary movement to the second damper section (5), wherein the at least one vibration absorber (8) is arranged on the second damper section (5) and/or on the lifting element (7).

3. Rotary damper according to any one of the preceding claims
**characterised in that**
the absorbing spring element (9) is designed as a mechanical spring or rubber-elastic elastomer body.

4. Rotary damper according to any one of the preceding claims
**characterised in that**
the absorbing mass (10) is a mass body made of elastomer and/or metal.

5. Rotary damper according to any one of claims 2 to 4
**characterised in that**
the damper element (2) comprises a hollow cylindrical housing (6) in which the first damper section (3) and the second damper section (5) are accommodated or integrated.

6. Rotary damper according to any one of claims 2 to 5
**characterised in that**
the first damper section (3) and the second damper section (5) are each designed as a hollow cylindrical body, wherein either the first damper section (3) is accommodated within the second damper section (5) or the second damper section (5) is accommodated within the first damper section (3).

7. Rotary damper according to claim 2, or according to claim 2 and any one of the preceding claims
**characterised in that**
the lifting element (7) and the second damper section (5) are connected by means of a gear mechanism wherein at least a first gear element is movably coupled with the lifting element (7) and via the latter can be rotated, and at least one second gear element, directly or indirectly transmission coupled with the first gear element is movably coupled with the second damper section (5) in such a way that a rotary movement of the second damper section (5) takes place.

8. Rotary damper according to claim 7
**characterised in that**
the gearing mechanism is designed as a planetary gear, strain wave gearing, cycloid gearing or helical gear.

9. Rotary damper according to any one of the preceding claims
**characterised in that**
it is designed as a hydraulic rotary damper (1) with at least one hydraulic damper element (2) or as an electric rotary damper (1) with at least one electric damper element (2).

## Revendications

1. Amortisseur rotatif (1) pour un véhicule automobile, comprenant au moins un élément amortisseur (2) qui est conçu pour amortir le mouvement relatif entre une première masse aménagée côté suspension de roues et une seconde masse aménagée côté carrosserie du véhicule,
caractérisé en ce qui :
sur l'amortisseur rotatif (1) est aménagé au moins un amortisseur d'oscillations (8), dans lequel l'amortisseur d'oscillations (8) comprend au moins un élément élastique d'amortissement souple (9) et au moins une masse d'amortissement (10) qui lui est reliée.

2. Amortisseur rotatif selon la revendication 1,
**caractérisé en ce que** :
l'élément amortisseur (2) comprend une première partie d'amortisseur fixe (3) et une seconde partie d'amortisseur (5) montée à rotation par rapport à la première partie en formant une force d'amortissement, couplée avec un élément de levier (7) déplaçable par déplacement de masses et relié à la première masse, dans lequel l'élément de levier (7) transfère, lors d'un déplacement de masses, un mouvement de rotation à la seconde partie d'amortisseur (5), dans lequel le au moins un amortisseur d'oscillations (8) est aménagé sur la seconde partie d'amortisseur (5) et/ou sur l'élément de levier (7).

3. Amortisseur rotatif selon la revendication 1 ou la revendication 2,
**caractérisé en ce que** :
l'élément élastique d'amortissement (9) se présente sous la forme d'un ressort mécanique ou d'un corps élastomère élastique comme le caoutchouc.

4. Amortisseur rotatif selon l'une quelconque des revendications précédentes,
**caractérisé en ce que** :
la masse d'amortissement (10) est un corps massique formé d'un élastomère et/ou d'un métal.

5. Amortisseur rotatif selon l'une quelconque des revendications 2 à 4,
**caractérisé en ce que** :
l'élément amortisseur (2) comprend un boîtier cylindrique creux (6) dans lequel la première partie d'amortisseur (3) et la seconde partie d'amortisseur (5) sont reçues ou intégrées.

6. Amortisseur rotatif selon l'une quelconque des revendications 2 à 5,
**caractérisé en ce que** :
la première partie d'amortisseur (3) et la seconde partie d'amortisseur (5) se présentent chacune sous la forme d'un corps cylindrique creux, dans lequel la première partie d'amortisseur (3) est reçue à l'intérieur de la seconde partie d'amortisseur (5) ou la seconde partie d'amortisseur (5) à l'intérieur de la première partie d'amortisseur (3).

7. Amortisseur rotatif selon la revendication 2 ou selon la revendication 2 et l'une quelconque des revendications précédentes,
**caractérisé en ce que** :
l'élément de levier (7) et la seconde partie d'amortisseur (5) sont couplés par un engrenage, dans lequel au moins un premier élément d'engrenage est couplé en déplacement avec l'élément de levier (7) et peut être déplacé en rotation via ce dernier, et au moins un second élément d'engrenage est couplé en prise directe ou indirecte avec le premier élément d'engrenage avec la seconde partie d'amortisseur (5) de sorte qu'il se produise un mouvement de rotation de la seconde partie d'amortisseur (5).

8. Amortissement rotatif selon la revendication 7,
**caractérisé en ce que** :
l'engrenage se présente sous la forme d'un engrenage planétaire, d'un engrenage à ondes de contrainte, d'un engrenage cycloïde ou d'un engrenage droit.

9. Amortisseur rotatif selon l'une quelconque des revendications précédentes,
**caractérisé en ce que** :
il se présente sous la forme d'un amortisseur rotatif hydraulique (1) avec au moins un élément amortisseur hydraulique (2) ou sous la forme d'un amortisseur rotatif électrique (1) avec au moins un élément amortisseur électrique (2).
